# EUROPÄISCHE PATENTSCHRIFT

(11) **EP 2 386 737 B1**
(45) Veröffentlichungstag und Bekanntmachung des Hinweises auf die Patenterteilung: **05.12.2012**
(21) Anmeldenummer: 11162775.8
(22) Anmeldetag: 18.04.2011
(51) Int. Cl.: F01N 3/20

(54) **Abdichtung für ein Fördermodul**
Seal for a supply module
Joint pour un module d'alimentation

(30) Priorität: 12.05.2010 DE 102010028908
(43) Veröffentlichungstag der Anmeldung: 16.11.2011
(73) Patentinhaber: Robert Bosch GmbH, 70442 Stuttgart (DE)
(72) Erfinder: Dietzhausen, Holger, 70499,Stuttgart (DE); Babic, Vlatko, 50823 Köln (DE); Hanneke, Juergen, 70499 Stuttgart (DE); Semet, Jan, 73553 Alfdorf-Vordersteinenberg (DE); Schott, Steffen, 71701 Schwieberdingen (DE)

(56) Entgegenhaltungen:
- EP-A1- 1 925 354
- WO-A1-2007/141312

## Beschreibung

### Stand der Technik

Bei Kraftfahrzeugen, die mit Verbrennungskraftmaschinen angetrieben werden, ist aufgrund der in den nächsten Jahren zu erwartenden verschärften Abgasgesetzgebung unter anderem der Schadstoff Stickoxid (NOₓ) in erhöhtem Maße zu reduzieren. Ein Verfahren, welches zur Reduzierung des Schadstoffes Stickoxid von Verbrennungskraftmaschinen eingesetzt wird, ist das Verfahren der selektiven katalytischen Reduktion (SCR), bei dem der Schadstoff Stickoxid (NOₓ) unter Zuhilfenahme eines Reduktionsmittels beispielsweise einer wässrigen Hamstofflösung zu Stickstoff N₂ und Wasser H₂O reduziert wird. Das flüssige Reduktionsmittel wird in einem Tank gelagert und mittels eines Förderaggregats wie zum Beispiel einer Pumpe, über eine Leitung von diesem Tank zu einer Dosierstelle gefördert.

Derartige Reduktionssysteme haben bereits Serienreife erreicht und werden in Serie gefertigt und in Kraftfahrzeugen verbaut.

Aus der EP1925354 ist es bekannt, einen Reduktionsmitteltank mit einem Förderaggregat zu versehen, das beispielsweise seitlich am Tank angeordnet sein kann.

### Darstellung der Erfindung

Erfindungsgemäß wird vorgeschlagen, ein Förderaggregat, so zum Beispiel eine Pumpe, mit welcher das Reduktionsmittel zur Eindosierungsstelle im Abgastrakt der Verbrennungskraftmaschine gefördert wird, direkt am Tankboden des das Reduktionsmittel aufnehmenden Tanks anzuordnen und die Ansaugstelle des Förderaggregats in den Tankboden zu verlegen.

Dies fordert eine axiale und radiale Relativbewegung kompensierende Abdichtung zwischen einer Anschlussgeometrie des Fördermodules und einer Ansaugstelle, die im Tankboden ausgebildet ist, so zum Beispiel einem Filter mit einer Ansaugstelle im Tankboden des Vorratstankes zur Aufnahme des Reduktionsmittels. Der erfindungsgemäß vorgeschlagenen Lösung folgend, wird zur Abdichtung des Vorrattankes und des Fördermoduls gegeneinander, ein balgartig ausgebildetes Dichtungsprofil eingesetzt. Mit diesem kann in vorteilhafter Weise erreicht werden, dass in axial und radiale Richtung erfolgende Relativbewegungen zwischen dem an der Unterseite des Tankbodens des Vorratstanks zur Aufnahme des Reduktionsmittels angeordneten Fördermodul und dem Tank kompensiert werden können. In vorteilhafter Weise ist das Dichtprofil balgartig ausgebildet und weist an einem Ende einen ersten Wulst und an dem anderen Ende einen zweiten verdickten Wulst auf. Der erste Wulst kann zum Beispiel in vorteilhafter Weise innerhalb eines ersten Verpressungsbereiches in einem Block aus Kunststoffmaterial des Tankbodens eingespannt werden. An dieser ersten Einspannstelle des balgartig konfigurierten Dichtungsprofiles erfolgt eine Abdichtung des Tankbodens gegen das Fördermodul. Ausgehend von dieser ersten Einspannstelle bzw. diesem ersten Verpressungsbereich zwischen dem Dichtprofil in Balgform und dem Tankboden, erstreckt sich die Wand des Dichtprofiles in axiale Richtung kontaktlos bis zu einem zweiten Verpressungsbereich. Dieser zweite Verpressungsbereich ist durch den am balgartig ausgebildeten Dichtprofil ausgebildeten zweiten Wulst gebildet, der in vorteilhafte Weise in einer zweiten Einspannstelle zwischen einem Überwurfring und einer Anschlussgeometrie des Fördermoduls ausgebildet ist.

Das erfindungsgemäß vorgeschlagene Dichtprofil, zur Abdichtung des Tankbodens gegen die Anschlussgeometrie des Fördermoduls erstreckt sich ausgehend von dem bereits erwähnten ersten Verpressungsbereich und zweiten Verpressungsbereich mit einem ersten Durchmesser und einem zweiten Durchmesser, wobei zwischen dem ersten Durchmesser und dem zweiten Durchmesser des balgartig ausgebildeten Dichtprofiles ein Übergangsbereich besteht. Der zweite Verpressungsbereich wird in vorteilhafter Weise durch einen Überwurfring gebildet, welcher den zweiten Wulst an der Mantelfläche des balgartig ausgebildeten Dichtprofiles gegen eine Mantelfläche der Anschlussgeometrie des Fördermodules drängt. In vorteilhafter Weise ist dieser Überwurfring mit einer Sicherungsfeder versehen, durch welche sichergestellt ist, dass der Überwurfring verliersicher an der Anschlussgeometrie des Fördermoduls, dem zweiten Verpressungsbereich zwischen dem zweiten Wulst des balgartig ausgebildeten Dichtprofiles und der Mantelfläche der Anschlussgeometrie bildend, gehalten ist. Durch die erfindungsgemäß vorgeschlagene Lösung wird erreicht, dass eine Abkopplung der Bauteile Tankboden und Anschlussgeometrie des Fördermodules erreicht wird, wodurch sich aufgrund des Umlaufspaltes zwischen dem Material des Tankbodens und der Anschlussgeometrie ein Freiraum bildet, der zur Kompensation axialer und radialer Relativbewegungen zwischen dem Tankboden und der Anschlussgeometrie des Fördermodules ausgenutzt werden kann. Die erfindungsgemäß vorgeschlagene Lösung erlaubt in vorteilhafter Weise eine Übertragung von Bewegungen, so zum Beispiel bei Schwingungen, .Eisgang und bei Stößen des Vorratstankes an das Fördermodul, welches an der Unterseite auf der Außenseite des Vorratstanks zur Aufnahme des Reduktionsmittelvorrates befestigt ist. Gleichzeitig ist sichergestellt, dass durch das erfindungsgemäß vorgeschlagene balgartig ausgebildete Dichtprofil der Vorratstank gegen das Fördermodul abgedichtet ist und die Ansaugstelle ohne eine zusätzliche Leitung das Medium, d.h. das Reduktionsmittel, so zum Beispiel eine wässrige Harnstofflösung ansaugen kann.

Durch die erfindungsgemäß vorgeschlagene Lösung ist ein deutlich höherer Toleranzausgleich hinsichtlich sich einstellender Fertigungsungenauigkeiten der miteinander zu koppelnden Bauteile gegeben. Des Weiteren erlaubt das erfindungsgemäß vorgeschlagene Konzept der Abdichtung zwischen dem Tankboden des Vorratstanks zur Aufnahme des Reduktionsmittels und dem dieses fördernden Fördermodul eine höhere Dichtheit aufgrund von Bauteilschrumpfungen über die Lebenszeit der gegeneinander abzudichtenden Komponenten gesehen.

Durch das erfindungsgemäß vorgeschlagene Dichtprofil in Balgform mit einem ersten umlaufenden Wulst und einem diesen gegenüberliegenden zweiten umlaufenden Wulst, ist eine Entkopplung der gegeneinander abzudichtenden Bauteile - im vorliegenden Anwendungsfall des Tankbodens des Vorratstanks gegen die Anschlussgeometrie des Fördermoduls - sichergestellt. Es wird keine starre Verbindung ausgebildet, die Verpressung, d.h. der erste Verpressungsbereich, der zweite Verpressungsbereich zwischen dem in Balgform ausgebildeten Dichtprofil und dem Tankboden bzw. der Anschlussgeometrie liegen voneinander entfernt. Zwischen dem ersten Verpressungsbereich und dem zweiten Verpressungsbereich vermag das erfindungsgemäß vorgeschlagene in Balgform ausgebildete Dichtprofil, radiale und axiale Relativbewegungen zwischen den gegeneinander abzudichtenden Komponenten auszugleichen und gleichzeitig die Dichtkraft gegen Austritt des Reduktionsmittels, so zum Beispiel eine wässrige Harnstofflösung nach außen, aufrechtzuerhalten. Der erste Verpressungsbereich und der zweite Verpressungsbereich im Kunststoffblock des Tankbodens bzw. zwischen der Anschlussgeometrie des Fördermoduls und dem Überwurfring liegen genau dort, wo die Abdichtstellen lokalisiert sind.

Durch das erfindungsgemäß vorgeschlagene Dichtprofil in Form eines Balges gelingt es, möglichen axialen Versatz der Ansaugstelle des Fördermodules zur Tanköffnung bei der Montage der Komponenten zu kompensieren. Dadurch lassen sich die Fertigungsgenauigkeiten, die bei der Herstellung der miteinander zu fügenden Komponenten erforderlich sind, reduzieren, was die Herstellungskosten wiederum günstig beeinflusst.

Kurze Beschreibung der Zeichnungen
- Figur 1: eine montierte Baugruppe aus Tankboden des Vorratstanks und an dessen Unterseite vorgesehenen Fördermodul,
- Figur 2: eine Explosionszeichnung der miteinander gefügten Komponenten Filter mit Ansaugstelle, Tankboden, Dichtung, Überwurfring, Sicherungsfeder und Fördermodul,
- Figur 3: das balgartig ausgebildete Dichtprofil eingespannt zwischen einer Metallhülse im Bereich der Ansaugstelle und der Anschlussgeometrie des Fördermoduls,
- Figur 4: eine Seitenansicht der in Figur 3 dargestellten Abdichtstelle zwischen dem Tankboden des Vorratstanks und der Anschlussgeometrie des Fördermoduls,
- Figur 5: eine perspektivische Ansicht des konfigurierten Ringes mit Sicherungsfeder und
- Figur 6: eine vergrößerte Darstellung des Dichtelementes im eingespannten Zustand zwischen einem Kunststoffblock im Tankboden und der Mantelfläche der Anschlussgeometrie des Fördermoduls.

### Ausführungsvarianten

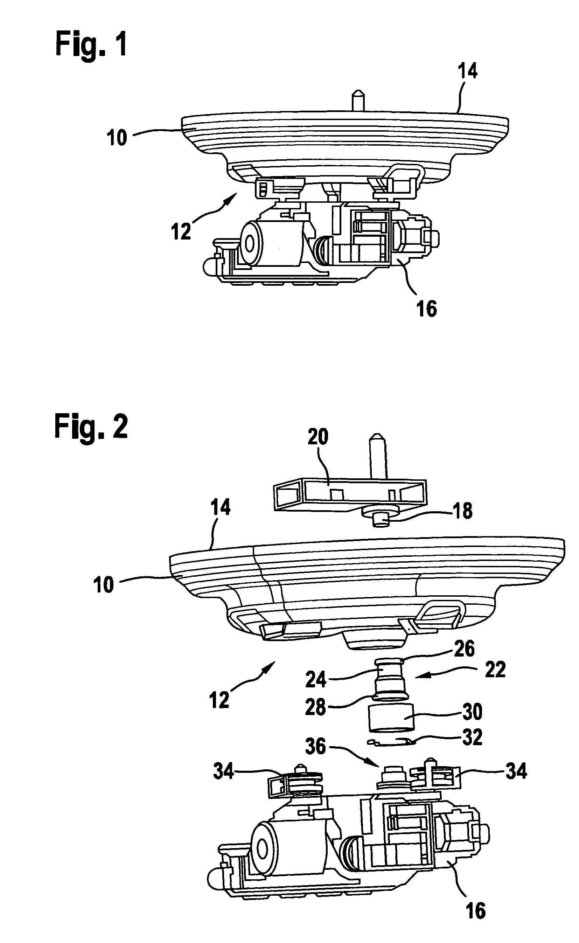

Der Darstellung gemäß Figur 1 ist eine Zusammenstellungszeichnung zu entnehmen, welche einen Tankboden, sowie ein Fördermodul im montierten Zustand darstellt. Ein Tankboden 10 eines Vorratstanks zur Bevorratung eines Betriebshilfsstoffes, wie zum Beispiel einer wässrigen Harnstofflösung als Reduktionsmittel zur Reduzierung von Stickoxiden im Abgas der Verbrennungskraftmaschine umfasst einen Tankboden 10. Der Vorratstank samt Tankboden 10 wird in der Regel als Kunststoffspritzgussbauteil hergestellt. Eine Unterseite des Tankbodens 10 ist durch Bezugszeichen 12 identifiziert. Der Tankboden 10 gemäß der Darstellung in Figur 1 weist eine umlaufende Stoß- bzw. Trennfuge 14 auf. An der Unterseite 12 des Tankbodens 10 befindet sich ein Fördermodul 16, welches mittels eines in Figur 2 detaillierter dargestellten Überwurfringes an der Unterseite 12 des Tankbodens mit diesem verbunden ist.

Durch die Montage des Fördermoduls 16 an der Unterseite 12 des Tankbodens 10 des Vorratstanks zur Aufnahme des Betriebs-Hilfsstoffes ist das Fördermodul 16 sehr leicht zugänglich.

Der Darstellung gemäß Figur 2 ist eine Explosionsdarstellung der in Figur 1 in zusammengebautem Zustand dargestellten Funktionsgruppe zu entnehmen.

Aus der Darstellung gemäß Figur 2 geht hervor, dass in den Tankboden 10 auf der der Unterseite 12 abgewandten Seite ein Filter 20 eingebaut wird, in dessen Bereich eine lanzenförmige Ansaugstelle 18 verläuft. Die Ansaugstelle 18 liegt im Tankboden bevorzugt an einer im Tankboden 10 auf dessen Innenseite ausgebildeten Kunststoffblockes 42. Aus der Explosionsdarstellung gemäß Figur 2 lässt sich des Weiteren entnehmen, dass ein Dichtprofil 22 einen ersten umlaufenden Wulst 26 sowie einen zweiten umlaufenden Wulst 28 aufweist. Das Dichtprofil 22, welches gemäß der Darstellung in Figur 2 als Balg 24 ausgebildet ist, dichtet den Tankboden 10 gegen eine Anschlussgeometrie 36 an der Oberseite des Fördermoduls 16 ab. Figur 2 zeigt des Weiteren, dass dem Dichtprofil 22 in Form eines Balges 24 ein Überwurfring 30 zugeordnet ist, der mittels einer Sicherungsfeder 32 mit zwei offenen Federschenkeln in seiner Einbauposition gesichert ist. Darüber hinaus zeigt die Darstellung gemäß Figur 2, dass sich das Fördermodul 16 mit einer Anzahl von Anstell-Trägern 34 - im dargestellten Ausführungsbeispiel drei an der Zahl - an der Unterseite 12 des Tankbodens 10 des Vorratstankes zur Aufnahme des Reduktionsmittelvorrates abstützt.

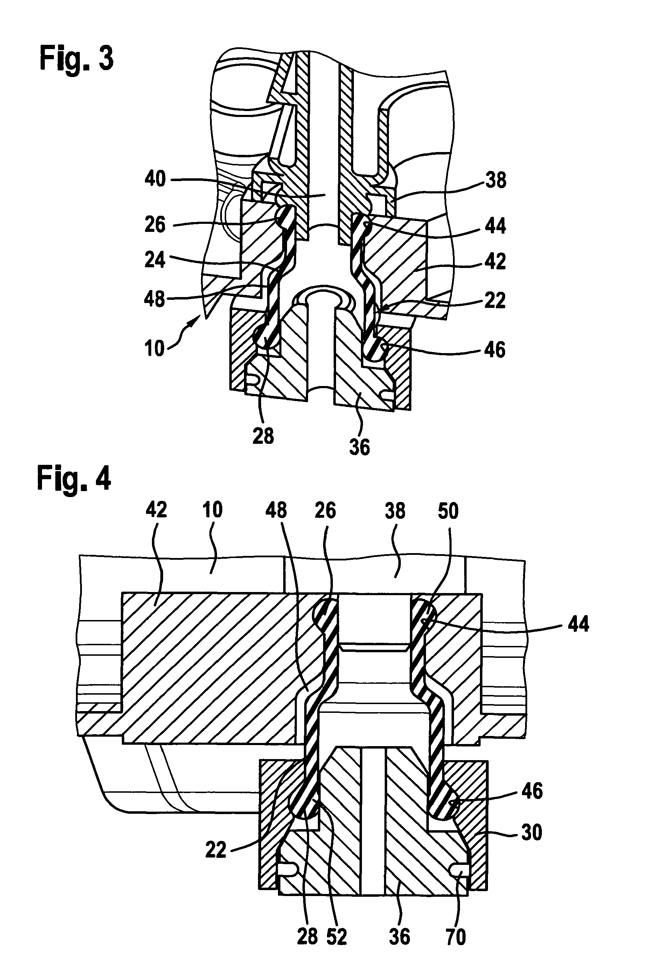

Figur 3 zeigt eine perspektivische Ansicht des eingebauten Dichtprofiles in Form eines Balges zwischen einer Anschlussgeometrie des Fördermoduls und einer Metallhülse im Bereich der Ansaugstelle.

Wie Figur 3 zeigt, erstreckt sich das Dichtprofil 22 in Form eines Balges 24 in axiale Richtung vom ersten umlaufenden Wulst 26 zum zweiten umlaufenden Wulst 28. Aus der Darstellung gemäß Figur 3 geht hervor, dass der erste umlaufende Wulst 26 des Dichtprofiles 22 in einer ersten Ausnehmung 44 einer blockförmigen Erhebung 42 am Tankboden 10 anliegt. In den freien Querschnitt des Dichtprofiles 22 erstreckt sich eine Metallhülse 38 an der Ansaugstelle 18. Ein freier Strömungsquerschnitt der Metallhülse 38 ist durch Bezugszeichen 40 gekennzeichnet. Wie aus der Darstellung gemäß Figur 3 hervorgeht, erstreckt sich das Innere der Metallhülse 38 entlang eines Überlappungsbereiches entlang des ersten umlaufenden Wulstes 26 in das Innere in Form eines Balges 24 ausgebildeten Dichtprofiles 22.

An dem dem ersten umlaufenden Wulst 26 gegenüberliegenden Ende des Dichtprofiles 22 in Form eines Balges 24, weist dieses einen zweiten umlaufenden Wulst 28 auf. Der zweite umlaufende Wulst 28 des Dichtprofiles 22 - welches bevorzugt aus einem reduktionsmittelbeständigen Kunststoff mit elastischen Eigenschaften gefertigt wird -, liegt innerhalb einer zweiten Ausnehmung 46, welche einerseits durch die Mantelfläche der Anschlussgeometrie 36 des Fördermoduls 16 und andererseits durch die Innenkontur des als Überwurfring ausgebildeten Ringes 30 gebildet wird. Wie aus der Darstellung gemäß Figur 3 des Weiteren hervorgeht, ist der als Überwurfring ausgebildete Ring 30 vom Tankboden entkoppelt, ebenso wie die Anschlussgeometrie 36 des Fördermoduls 16. Dadurch ergibt sich in vorteilhafter Weise, dass der Tankboden 10 des den Betriebshilfsstoff aufnehmenden Tanks und die Anschlussgeometrie 36 des Fördermoduls 16 nur durch das axiale und radiale Relativbewegungen ausgleichende Dichtprofil verbunden sind. Wie in Figur 3 angedeutet, erstreckt sich im Bereich der blockförmigen Erhebung 42 auf der Innenseite des Tankbodens 10 entlang der Mantelfläche des Dichtprofiles 22 ein umlaufender Spalt 48. Dies bedeutet, dass sich lediglich ein Teil des als Balg 24 ausgebildeten Dichtprofiles 22 unterhalb des ersten umlaufenden Wulstes 26 in Kontakt mit dem Kunststoffblock 42 am Tankboden 10 befindet, während ab einer Durchmesserverbreiterung in axiale Richtung des Dichtprofiles 22 gesehen, dieses durch den Umlaufspalt 48 getrennt vom Tankboden 10 ist. Der Strömungsquerschnitt 40, die Metallhülse 38 und der Strömungsquerschnitt der Anschlussgeometrie 36 des Fördermoduls 16 entsprechen im Wesentlichen einander.

Durch die axiale Länge des Dichtprofiles 22 zwischen dem ersten umlaufenden Wulst 26 sowie dem zweiten umlaufenden Wulst 28 an den beiden Enden des Dichtprofiles ergibt sich das Maß, um welches der als Überwurfring ausgebildete Dichtring 30 von der Unterseite 12 des Tankbodens 10 entfernt angeordnet ist.

Figur 4 zeigt eine Seitenansicht der in Figur 3 dargestellten perspektivischen Wiedergabe der Metallhülse des verbauten Dichtprofiles sowie der Anschlussgeometrie des Fördermoduls, gesichert durch den als Überwurfring ausgebildeten Ring.

Wie Figur 4 zeigt, bildet der erste umlaufende Wulst 26 mit der ersten Ausnehmung 44 im Kunststoffblock 42 an der Innenseite des Tankbodens 10 einen ersten Verpressungsbereich 50. Ein zweiter Verpressungsbereich 52 ist durch den zweiten umlaufenden Wulst 28 gegeben, der durch den als Überwurfring ausgebildeten Ring 30 an eine Mantelfläche der Anschlussgeometrie angestellt wird. Aus Figur 4 ist besonders gut zu erkennen, dass unterhalb des ersten Verpressungsbereiches 50 des Dichtprofiles 22 dessen Außenfläche innerhalb des Umlaufspalts 48 kontaktfrei in Bezug auf die Aufnahmeöffnung im Kunststoffring 42 des Tankbodens 10 verläuft.

Der erste Verpressungsbereich 50 bzw. der zweite Verpressungsbereich 52, mit welchen das Dichtprofil 22 einerseits im Tankboden 10 und andererseits an der Anschlussgeometrie 36 des Fördermoduls 16 abgedichtet ist, liegen dort, wo auch Dichtbereiche liegen. Aus der Darstellung des montierten Zustandes des Dichtprofiles gemäß Figur 4 geht hervor, dass das Dichtprofil 22, ausgebildet als Balg 24, große Relativbewegungen in radiale und axiale Richtung auszugleichen vermag, was nicht zuletzt seiner Geometrie und seinen elastischen Eigenschaften geschuldet ist.

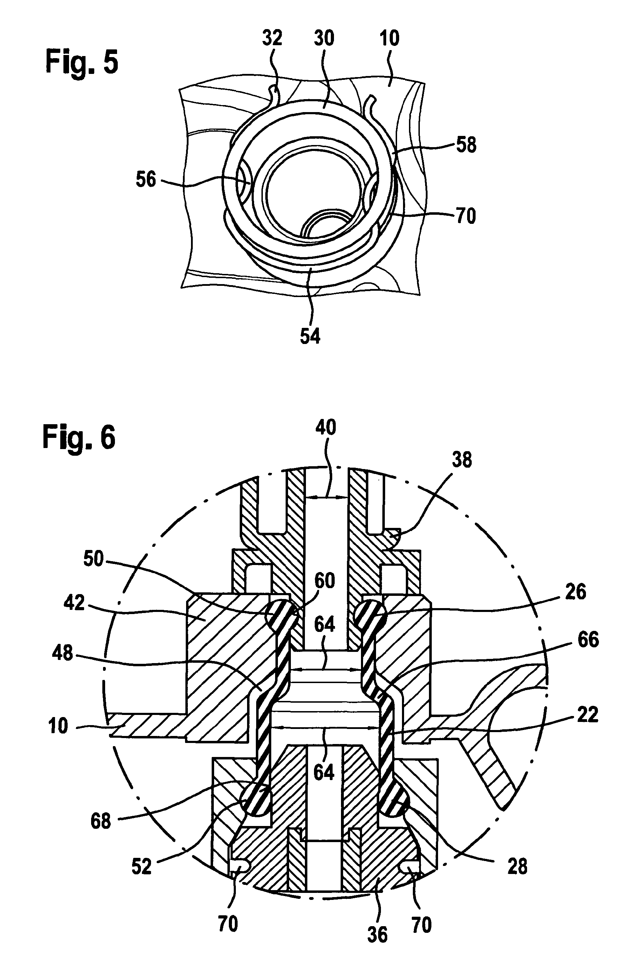

Der Darstellung gemäß Figur 5 ist zu entnehmen, dass der Ring 30 als Überwurfring ausgebildet - eine umlaufende Nut zur Aufnahme der Sicherungsfeder 32 aufweist. Die Sicherungsfeder 32 umfasst im Wesentlichen zwei sich parallel zueinander erstreckende Federschenkel, die jeweils eine Krümmung radial nach innen aufweisen. Nach Einschieben der Sicherungsfeder ist der als Überwurfring ausgebildete Ring 30 an der Anschlussgeometrie 36 des Fördermoduls 16 lösbar fixiert. Die Verbindung bzw. die Abdichtung zwischen dem Dichtprofil 22 gemäß der Darstellung in Figur 5 und der Abdichtgeometrie 36 des Fördermoduls 36, vergleiche Darstellung gemäß Figur 4, kann durch radiales Ziehen der Sicherungsfeder 32 einfach aufgehoben werden. Nach Ziehen der Sicherungsfeder 32 kann die Anschlussgeometrie 36 des Fördermoduls 16 einfach nach unten aus dem Dichtprofil 22, vergleiche Darstellung gemäß Figur 2, herausgezogen werden, so dass eine sehr leichte Demontage des Fördermoduls 16 möglich ist. Mit Bezugszeichen 56 ist ein erster Schenkel der Sicherungsfeder 32 bezeichnet, während Bezugszeichen 58 einen zweiten Schenkel der Sicherungsfeder 32 bezeichnet. Die beiden Schenkel 56 bzw. 58 der Sicherungsfeder 32 erstrecken sich im Wesentlichen parallel zueinander in einer Aufnahmenut des als Überwurfring ausgebildeten Sicherungsrings 30.

Der Darstellung gemäß Figur 6 ist eine in vergrößertem Maßstab wiedergegebene Demontageposition des Dichtprofiles zu entnehmen.

Figur 6 zeigt, dass in montiertem Zustand das Dichtprofil 22 in Balgform 24 an dem ersten Verpressungsabschnitt 50 in Bezug auf den Kunststoffblock 42 des Tankbodens 10 dichtet und am zweiten Verpressungsbereich 52 mit seinem zweiten umlaufenden Wulst 28 eine Mantelfläche 68 der Anschlussgeometrie 36 des Fördermoduls 16 abdichtet. Durch die Geometrie des Dichtprofiles 22 kann erreicht werden, dass das Fördermodul 16, welches die Anschlussgeometrie 36 aufweist, entkoppelt vom Tankboden 10 aufgenommen werden kann, sowie die Dichtstellen mit dem ersten Verpressungsbereich 50 im Tankboden und mit dem zweiten Verpressungsbereich 52 zwischen dem als Überwurfring ausgebildeten Ring 30 und der Anschlussgeometrie 36 liegen. Wie Figur 6 des Weiteren zeigt, erstreckt sich unterhalb des ersten Verpressungsbereiches 50 das als Balg 24 ausgebildete Dichtprofil 22 mit einem ersten Durchmesser 62 in Richtung auf einen Übergangsbereich 66. Innerhalb des Übergangsbereiches 66 geht der erste Innendurchmesser 62 des Dichtprofiles 22 in einen diesen übersteigenden zweiten Innendurchmesser 64 über. Der zweiten Innendurchmesser 64 des Dichtprofiles 22 entspricht im Wesentlichen dem Außendurchmesser der Mantelfläche 68 der Anschlussgeometrie 30, die teilweise in das Dichtprofil 22 - wie in Figur 6 zu ersehen - eingesteckt ist. Gleiches gilt für ein teilweises Hineinragen eines Anschlusses der Metallhülse 38 in das Dichtprofil im Bereich seines ersten umlaufenden Wulstes 26.

Wie Figur 6 zeigt, ist das Fördermodul 36 gekoppelt mit dem Dichtprofil 22 über die Anschlussgeometrie 26 in den zweiten Verpressungsbereich 52 frei beweglich in Bezug auf den Tankboden 10 ausgebildet. Des Weiteren geht aus der Darstellung gemäß Figur 6 hervor, dass das Dichtprofil 22 unterhalb des ersten Verpressungsbereiches 50, d.h. dem im verpressten Zustand komprimierten ersten umlaufenden Wulst 26 kontaktlos, d.h. einen Umlaufspalt 48 zum Kunststoffblock 42 aufweisend, sich in axiale Richtung erstreckt. Der Darstellung gemäß Figur 6 ist darüber hinaus zu entnehmen, dass sich am Umfang der Anschlussgeometrie 36 unterhalb der Mantelfläche 68 eine Sicherungsnut befindet, in die der in der Explosionsdarstellung gemäß Figur 2 dargestellte Sicherungsfeder 32 und sowie der in Figur 5 dargestellte den ersten Federschenkel 56 und den zweiten Federschenkel 58 aufweisende Sicherungsbügel 32 aufgenommen ist.

Durch die erfindungsgemäß vorgeschlagene Abdichtung zwischen dem Tankboden 10 des den Betriebshilfsstoff aufnehmenden Vorratstanks und dem Fördermodul 16, kann eine Abdichtung erreicht werden, die dauerfest ist und auftretende Relativbewegungen zwischen den gegeneinander abzudichtenden Bauteilen, d.h. dem Tankboden 10 und dem Fördermodul 16 in axiale und radiale Richtung kompensiert und dazu auch nach etlichen tausend Temperaturwechseln noch in der Lage ist. Des Weiteren kann durch die erfindungsgemäß vorgeschlagene Lösung erreicht werden, dass ein deutlich verbesserter Toleranzausgleich hinsichtlich Fertigungsgenauigkeiten zwischen den gegeneinander abzudichtenden Komponenten, d.h. insbesondere der Anschlussgeometrie 36 des Fördermoduls 16 auf der einen Seite und andererseits den Tankboden 10 erreicht wird. Des Weiteren ist zu erwähnen, dass in besonders vorteilhafter Weise die zu erwartende Dichtheit aufgrund von Bauteilschrumpfungen über das Alter der Abdichtung, d.h. die Betriebszeit gesehen, deutlich verbessert ist.

Die Abdichtwirkung, die durch das erfindungsgemäß vorgeschlagene als Balg 24 konfigurierte Dichtprofil 22 erreicht wird, kann durch die Tiefe der ersten Ausnehmung 44 im Kunststoffblock 42 und/oder die Vertiefung 46 beeinflusst werden, die an der Innenseite des als Überwurfring ausgebildeten Rings 30 ausgebildet ist. Entsprechendes gilt für die Dicke der umlaufenden Wülste 26, 28 an den beiden Stirnseiten des als Balg 24 ausgebildeten Dichtprofiles 22. Werden die umlaufenden Wülste 26, 28 hinsichtlich ihrer Dicke unterschiedlich dimensioniert, so lassen sich unterschiedlich hohe Verpressungen innerhalb des Verpressungsbereiches 50 sowie des zweiten Verpressungsbereiches 52 einstellen und dauerhaft aufrechterhalten.

Durch die erfindungsgemäß vorgeschlagene Lösung ist des Weiteren in vorteilhafter Weise eine weitestgehend werkzeuglose Demontage des Fördermoduls 16 von der Unterseite 12 des Tankbodens 10 des Vorratstanks möglich, sobald die Sicherungsfeder 32 gezogen wird und sich dadurch die Anschlussgeometrie 36 des Fördermoduls 16 einfach vom unteren Bereich des als Balg 24 ausgebildeten Dichtprofiles 22 abziehen lässt.

## Patentansprüche

1. Vorratstank zur Aufnahme eines Betriebshilfsstoffes, insbesondere eines Reduktionsmittels für eine Brennkraftmaschine, mit einem Tankboden (10) und einem Fördermodul (16), **dadurch gekennzeichnet, dass** der Tankboden (10) und das Fördermodul (16) durch ein balgartiges, radiale und axiale Relativbewegungen zwischen Tankboden (10) und dem Fördermodul (16) ausgleichendes Dichtprofil (22, 24) abgedichtet sind.

2. Vorratstank gemäß Anspruch 1, **dadurch gekennzeichnet, dass** das Dichtprofil (22, 24) einen ersten umlaufenden Wulst (26) sowie einen zweiten umlaufenden Wulst (28) aufweist.

3. Vorratstank gemäß einem der vorhergehenden Ansprüche, **dadurch gekennzeichnet, dass** das Dichtprofil (22, 24) am ersten umlaufenden Wulst (26) in einer ersten Ausnehmung (44) eines Kunststoffblocks (42) des Tankbodens (10) in einem ersten Verpressungsbereich (50) eingespannt ist.

4. Vorratstank gemäß des vorhergehenden Anspruchs, **dadurch gekennzeichnet, dass** sich das Dichtprofil (22, 24) vom ersten Verpressungsbereich (50) ausgehend, in einem Umlaufspalt (48) kontaktlos zu einem Ring (30) erstreckt, der eine Anschlussgeometrie (36) des Fördermodules (16) umschließt.

5. Vorratstank gemäß einem der vorhergehenden Ansprüche, **dadurch gekennzeichnet, dass** der zweite umlaufende Wulst (28) des Dichtprofiles (22) zwischen dem Ring (30) und der Anschlussgeometrie (36) in einem zweiten Verpressungsbereich (52) eingespannt ist.

6. Vorratstank gemäß einem der vorhergehenden Ansprüche, **dadurch gekennzeichnet, dass** sich das Dichtprofil (22, 24) zwischen den Verpressungsbereichen (50, 52) im Umlaufspalt (48) erstreckt.

7. Vorratstank gemäß einem der vorhergehenden Ansprüche, **dadurch gekennzeichnet, dass** der Ring (30) eine Sicherungsfeder (32) aufnimmt.

8. Vorratstank gemäß einem der vorhergehenden Ansprüche, **dadurch gekennzeichnet, dass** das Dichtprofil (22, 24) einen Bereich in einem ersten Durchmesser (62) aufweist sowie einen Bereich, der in einem zweiten Durchmesser (64) ausgebildet ist.

9. Vorratstank gemäß einem der vorhergehenden Ansprüche, **dadurch gekennzeichnet, dass** der erste Durchmesser (62) des Dichtprofiles (22, 24) dem Durchmesser einer Metallhülse (38) an einer Umlaufnut (60) entspricht.

10. Vorratstank gemäß einem der vorhergehenden Ansprüche, **dadurch gekennzeichnet, dass** der zweite Durchmesser (64) des Dichtprofiles (22, 24) dem Durchmesser einer Mantelfläche (68) der Anschlussgeometrie (36) des Fördermoduls (16) entspricht.

## Claims

1. Storage tank for accommodating an operating adjuvant, in particular a reducing agent for an internal combustion engine, with a tank bottom (10) and with a supply module (16), **characterized in that** the tank bottom (10) and supply module (16) are sealed off by means of a bellows-like sealing profile (22, 24) compensating radial and axial relative movements between the tank bottom (10) and supply module (16).

2. Storage tank according to Claim 1, **characterized in that** the sealing profile (22, 24) has a first peripheral bead (26) and a second peripheral bead (28).

3. Storage tank according to one of the preceding claims, **characterized in that** the sealing profile (22, 24) is tension-mounted at the first peripheral bead (26) in a first recess (44) of a plastic block (42) of the tank bottom (10) in a first compression region (50).

4. Storage tank according to the preceding claim, **characterized in that** the sealing profile (22, 24) extends from the first compression region (50), in a continuous gap (48), contactlessly to a ring (30) which surrounds a connection geometry (36) of the supply module (16).

5. Storage tank according to one of the preceding claims, **characterized in that** the second peripheral bead (28) of the sealing profile (22) is tension-mounted between the ring (30) and the connection geometry (36) in a second compression region (52).

6. Storage tank according to one of the preceding claims, **characterized in that** the sealing profile (22, 24) extends in the continuous gap (48) between the compression regions (50, 52).

7. Storage tank according to one of the preceding claims, **characterized in that** the ring (30) accommodates a securing spring (32).

8. Storage tank according to one of the preceding claims, **characterized in that** the sealing profile (22, 24) has a region in a first diameter (62) and a region which is formed in a second diameter (64).

9. Storage tank according to one of the preceding claims, **characterized in that** the first diameter (62) of the sealing profile (22, 24) corresponds to the diameter of a metal sleeve (38) at a continuous groove (60).

10. Storage tank according to one of the preceding claims, **characterized in that** the second diameter (64) of the sealing profile (22, 24) corresponds to the diameter of a surface area (68) of the connection geometry (36) of the supply module (16).

## Revendications

1. Réservoir pour recevoir un additif de processus, en particulier un agent réducteur pour un moteur à combustion interne, comprenant un fond de réservoir (10) et un module d'alimentation (16), **caractérisé en ce que** le fond de réservoir (10) et le module d'alimentation (16) sont étanchéifiés par un profil d'étanchéité (22, 24) de type soufflet, compensant les mouvements relatifs radiaux et axiaux entre le fond de réservoir (10) et le module d'alimentation (16).

2. Réservoir selon la revendication 1, **caractérisé en ce que** le profil d'étanchéité (22, 24) présente un premier bourrelet périphérique (26) et un deuxième bourrelet périphérique (28).

3. Réservoir selon l'une quelconque des revendications précédentes, **caractérisé en ce que** le profil d'étanchéité (22, 24) est serré sur le premier bourrelet périphérique (26) dans un premier évidement (44) d'un bloc en plastique (42) du fond de réservoir (10) dans une première région de pressage (50).

4. Réservoir selon la revendication précédente, **caractérisé en ce que** le profil d'étanchéité (22, 24) s'étend à partir de la première région de pressage (50) dans un interstice périphérique (48) sans contact jusqu'à une bague (30), qui entoure une géométrie de raccordement (36) du module d'alimentation (16).

5. Réservoir selon l'une quelconque des revendications précédentes, **caractérisé en ce que** le deuxième bourrelet périphérique (28) du profil d'étanchéité (22) est serré entre la bague (30) et la géométrie de raccordement (36) dans une deuxième région de pressage (52).

6. Réservoir selon l'une quelconque des revendications précédentes, **caractérisé en ce que** le profil d'étanchéité (22, 24) s'étend entre les régions de pressage (50, 52) dans l'interstice périphérique (48).

7. Réservoir selon l'une quelconque des revendications précédentes, **caractérisé en ce que** la bague (30) reçoit un ressort de fixation (32).

8. Réservoir selon l'une quelconque des revendications précédentes, **caractérisé en ce que** le profil d'étanchéité (22, 24) présente une région dans un premier diamètre (62) ainsi qu'une région réalisée dans un deuxième diamètre (64).

9. Réservoir selon l'une quelconque des revendications précédentes, **caractérisé en ce que** le premier diamètre (62) du profil d'étanchéité (22, 24) correspond au diamètre d'une douille métallique (38) sur une rainure périphérique (60).

10. Réservoir selon l'une quelconque des revendications précédentes, **caractérisé en ce que** le deuxième diamètre (64) du profil d'étanchéité (22, 24) correspond au diamètre d'une surface d'enveloppe (68) de la géométrie de raccordement (36) du module d'alimentation (16).
